Europäisches Patentamt

European Patent Office

Office européen des brevets

(19)

(11) Numéro de publication: **0 024 990**
**B1**

(12) **FASCICULE DE BREVET EUROPEEN**

(45) Date de publication du fascicule du brevet:
25.05.83

(51) Int. Cl.³: **G 21 C 19/20**

(21) Numéro de dépôt: **80401217.7**

(22) Date de dépôt: **26.08.80**

(54) **Ensemble de traversée de dalle de confinement pour transfert de combustible nucléaire irradié.**

(30) Priorité: **30.08.79 FR 7921762**

(43) Date de publication de la demande:
**11.03.81 Bulletin 81/10**

(45) Mention de la délivrance du brevet:
**25.05.83 Bulletin 83/21**

(84) Etats contractants désignés:
**BE DE GB IT NL**

(56) Documents cités:
**FR-A-2 207 614**
**REVUE GENERALE DE THERMIQUE, vol. 18, no. 208, avril 1979 Paris FR MONTMAYEUR: »Applications récentes des caloducs au Centre d'Etudes Nucléaires du Grenoble«, pages 223—227**
**REVUE GENERALE DE THERMIQUE, vol. 16, no. 192, décembre 1977 Paris FR MARTINET: »Les caloducs et leurs applications«, pages 865-880**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Aubert, Michel, Chemin de Sainte Roustagne, F-04100 Manosque (FR)**
Inventeur: **Bret, Antoine, Les Lauves d'Entremont Chemin de la Rose, F-13100 Aix en Provence (FR)**

(74) Mandataire: **Mongrédien, André et al, c/o BREVATOME 25, rue de Ponthieu, F-75008 Paris (FR)**

## Ensemble de traversée de dalle de confinement pour transfert de combustible nucléaire irradié

L'invention concerne un ensemble de traversée de dalle de confinement pour transfert de combustible nucléaire irradié, notamment entre la cuve contenant le coeur d'un réacteur nucléaire à neutrons rapides et une zone de stockage des combustibles nucléaires irradiés disposée à l'extérieur de la cuve.

Dans les réacteurs nucléaires à neutrons rapides, le combustible est généralement disposé à l'intérieur d'aiguilles gainées disposées en faisceau dans des boîtiers allongés constituant des assemblages pourvus d'une tête de préhension permettant leur manutention. Au cours de cette manutention, et en particulier lors du remplacement dans le coeur du réacteur d'un assemblage irradié par un assemblage neuf, l'assemblage irradié est extrait du coeur au moyen d'un grappin de préhension et transféré jusqu'à un pot de manutention placé à la périphérie du coeur, à la base d'une rampe de guidage inclinée permettant d'acheminer l'assemblage irradié jusqu'à une hotte pivotante disposée au-dessus de la dalle de la cuve du réacteur. Une seconde rampe de guidage inclinée, qui débouche dans la hotte pivotante, permet d'acheminer l'assemblage irradié dans un réceptacle de stockage externe contigu à la couve du réacteur et fermé par une dalle prolongeant la dalle de la cuve du réacteur.

L'assemblage irradié est alors extrait du pot de manutention et placé dans un alvéole où il perd une partie de son activité, avant d'être introduit dans un étui étanche et enfermé dans un château blindé permettant de le transporter jusqu'à un centre de retraitement.

Dans les solutions utilisées jusqu'à présent, après qu'il ait été extrait du coeur du réacteur, l'assemblage irradié est stocké pendant un certain temps à l'intérieur même de la cuve avant d'être sorti de l'enceinte de confinement. Cependant, ce procédé a pour inconvénient d'augmenter sensiblement le volume de la cuve et d'allonger la durée d'immobilisation de l'assemblage irradié et, par conséquent, le cycle du combustible. Pour remédier à ces inconvénients, on a proposé dans le brevet français FR-A-2 235 462 déposé le 27 juin 1973 au nom du Commissariat à l'Energie Atomique pour »Procédé de manutention des assemblages combustibles irradiés dans un réacteur à neutrons rapides et installation pour la mise en oeuvre de ce procédé«, de transférer l'assemblage irradié dans le réceptacle de stockage extérieur à la cuve du réacteur dès que cet assemblage est extrait du coeur, le pot de manutention dans lequel est placé l'assemblage au cours de son transport étant agencé de façon à évacuer les calories dégagées par cet assemblage.

Lorsque les assemblages irradiés sont transférés directement de la cuve du réacteur dans le réceptacle de stockage, l'énergie dissipée par ces assemblages est importante. Il est donc nécessaire de prévoir l'évacuation de cette énergie en cas de blocage du pot de manutention au niveau des traversées des dalles de confinement de la cuve du réacteur et du réceptacle de stockage.

La présente invention a pour objet la réalisation d'un ensemble de traversée de ces dalles permettant d'évacuer la puissance résiduelle de l'assemblage irradié contenu dans le pot de manutention, même en cas de blocage accidentel de ce dernier au niveau de la traversée d'une dalle.

A cet effet, et conformément à l'invention, il est proposé un ensemble de traversée de dalle de confinement pour transfert de combustible nucléaire irradié, comprenant une virole de traversée solidaire de la dalle et une rampe de guidage traversant la virole et dans laquelle se déplace un pot de manutention portant le combustible, ledit ensemble étant caractérisé en ce qu'il comprend de plus un dispositif d'évacuation de la chaleur résiduelle dissipée par le combustible, ce dispositif comportant un faisceau de caloducs disposés parallèlement à la rampe sur une longueur au moins égale à celle de la virole et des moyens pour évacuer le flux de chaleur acheminé au-dessus de la dalle par les caloducs.

Conformément à un mode de réalisation préféré de l'invention, les moyens pour évacuer le flux de chaleur acheminé au-dessus de la dalle par les caloducs comprennent une calandre annulaire dans laquelle circule un fluide de refroidissement, le faisceau de caloducs se prolongeant à l'intérieur de ladite calandre. Afin de favoriser l'échange de chaleur entre le fluide caloporteur contenu dans les caloducs et le fluide de refroidissement circulant dans la calandre, la partie de chacun des caloducs disposée à l'intérieur de la calandre comporte de préférence des ailettes de refroidissement. De plus, une chicane hélicoïdale peut être disposée dans la calandre entre un orifice d'entrée et un orifice de sortie du fluide de refroidissement pour améliorer la circulation du fluide de refroidissement à l'intérieur de la calandre.

Selon une première variante de l'invention, les caloducs sont disposés dans l'espace annulaire défini entre la virole et la rampe. De préférence, les caloducs sont alors répartis autour de la rampe en regard de lumières ménagées dans celle-ci. En outre, le dispositif d'évacuation de la chaleur résiduelle dissipée par le combustible et la rampe de guidage peuvent être démontables indépendamment l'un de l'autre, ce qui vacilite l'inspection et la maintenance des différentes parties de l'ensemble de traversée.

Selon une deuxième variante de l'invention, les caloducs sont disposés à l'intérieur de la rampe de guidage, de part et d'autre du pot de manutention. La partie de la rampe disposée à l'intérieur de la calandre peut alors être munie d'au moins un élément amovible, le dispositif d'évacuation de la chaleur résiduelle dissipée par le combustible étant démontable après dépose dudit élément, et la rampe de guidage étant démontable après dépose de ce dispositif.

Conformément à une autre caractéristique de l'invention, des moyens sont prévus pour assurer le positionnement radial des caloducs par rapport à la rampe tout en permettant leur déplacement relatif selon une direction parallèle à l'ace de la rampe. Cette caractéristique permet de tenir compte des dilatations différentielles et autorise le démontage des différentes parties de l'ensemble.

Conformément à encore une autre caractéristique de l'invention, le fluide caloporteur contenu dans les caloducs est du mercure.

On décrira maintenant, à titre d'exemple non limitatif, différentes variantes de réalisation de l'invention en se référant aux dessins annexés dans lesquels:

—	la figure I est une vue en coupe transversale schématique d'une installation permettant de transférer un assemblage irradié du coeur d'un réacteur nucléaire jusqu'à un réceptacle externe de stockage,
—	la figure 2a est une vue en coupe longitudinale agrandie de l'un des ensembles de traversée de dalle représentés sur la figure 1, illustrant une première variante de réalisation de l'invention,
—	les figures 2b et 2c illustrent respectivement de façon schématique le démontage de la rampe et du dispositiv d'évacuation de la chaleur dans la variante représentée sur la figure 2a,
—	la figure 3 est une vue en coupe, à plus grande échelle, selon la ligne III-III de la figure 2a,
—	la figure 4a est une vue en coupe longitudinale comparable à la figure 2a, illustrant une seconde variante de réalisation d'un ensemble de traversée de dalle de confinement selon l'invention,
—	la figure 4b illustre de façon schématique le démontage du dispositif d'évacuation de la chaleur, puis de la rampe, selon un premier mode de réalisation de la variante représentée sur la figure 4a,
—	la figure 5 est une vue en coupe selon la ligne V-V de la figure 4a, et
—	la figure 6 est une vue en perspective de l'extrémité supérieure d'un ensemble de traversée de dalle de confinement de la variante représentée sur la figure 4a, illustrant un second mode de réalisation de l'invention.

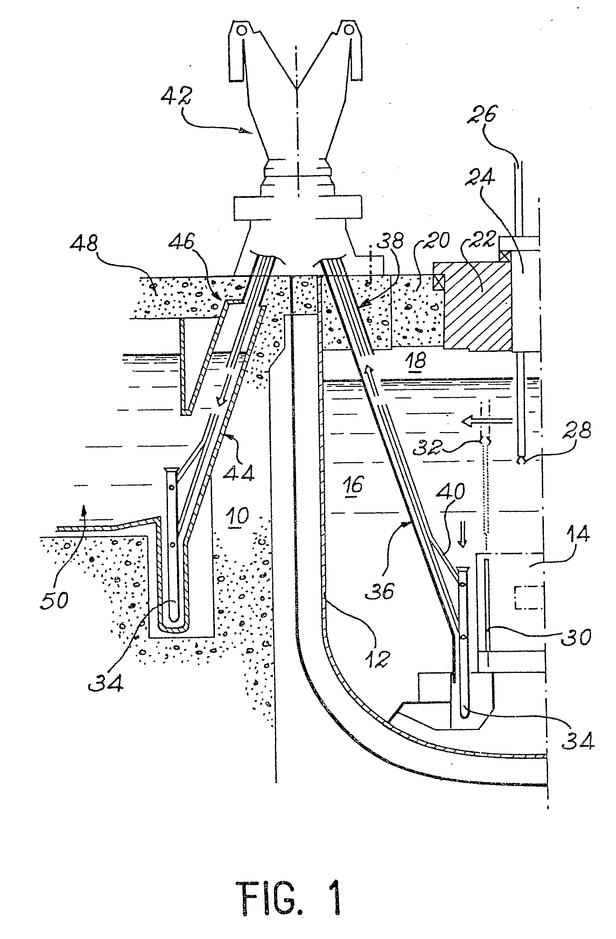

Sur la figure 1, la référence 10 désigne une enceinte à paroi épaisse, généralement en béton, délimitant intérieurement une cavité ouverte de forme générale cylindrique à axe vertical, dans laquelle est montée la cuve 12 d'un réacteur nucléaire à neutrons rapides. Le coeur 14 de ce réacteur, disposé à l'intérieur de la cuve 12 est immergé dans un métal liquide de refroidissement 16, tel que du sodium, surmonté par une couche 18 d'un gaz inerte tel que de l'argon. La partie supérieure de la couve 12 est suspendue à une dalle horizontale 20 obturant l'enceinte 10.

La dalle 20 comporte différents orifices de passage permettant l'accès à l'intérieur de la couve, et notamment une ouverture circulaire dans laquelle est monté un ensemble constitué par deux bouchons tournants 22 et 24 excentrés l'un par rapport à l'autre de façon telle que les rotations combinées de ces deux bouchons permettent à un organe de manutention 26 traversant le bouchon 24 de venir se positionner à la verticale de n'importe quel point du coeur 14. L'organe 26 comporte à son extrémité inférieure située dans la cuve 12 un grappin de préhension 28 apte à venir saisir la tête de manutention 32 de chacun des assemblages 30 qui constituent le coeur 14.

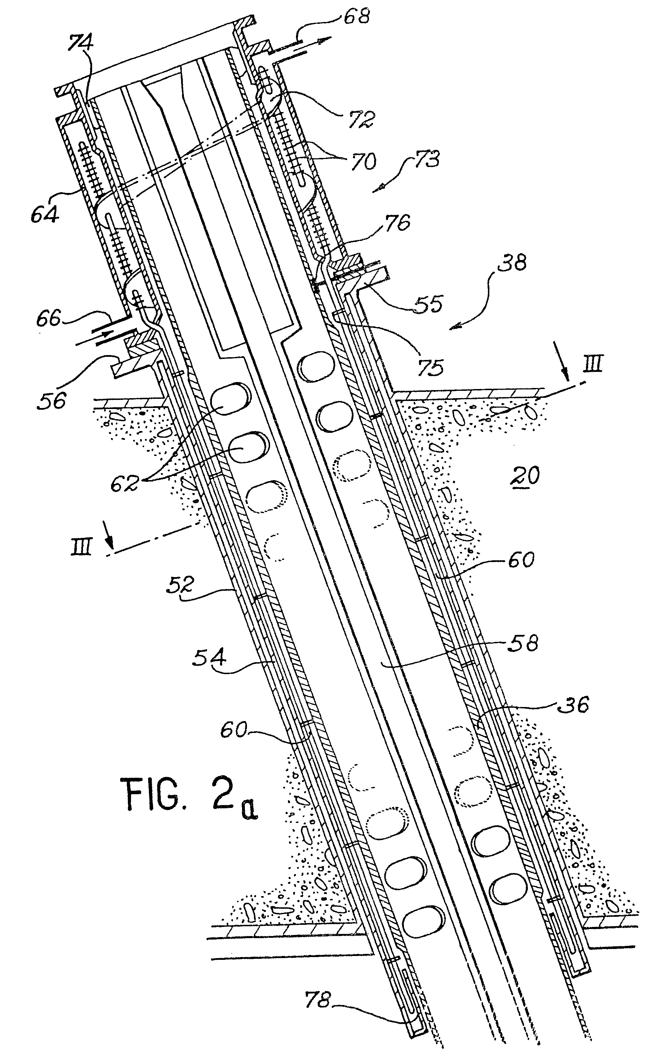

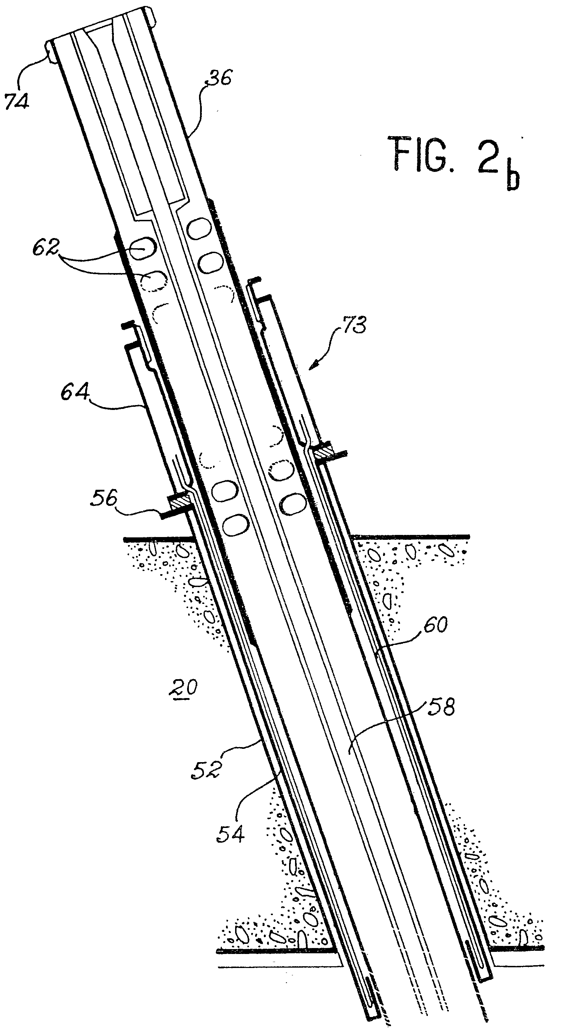

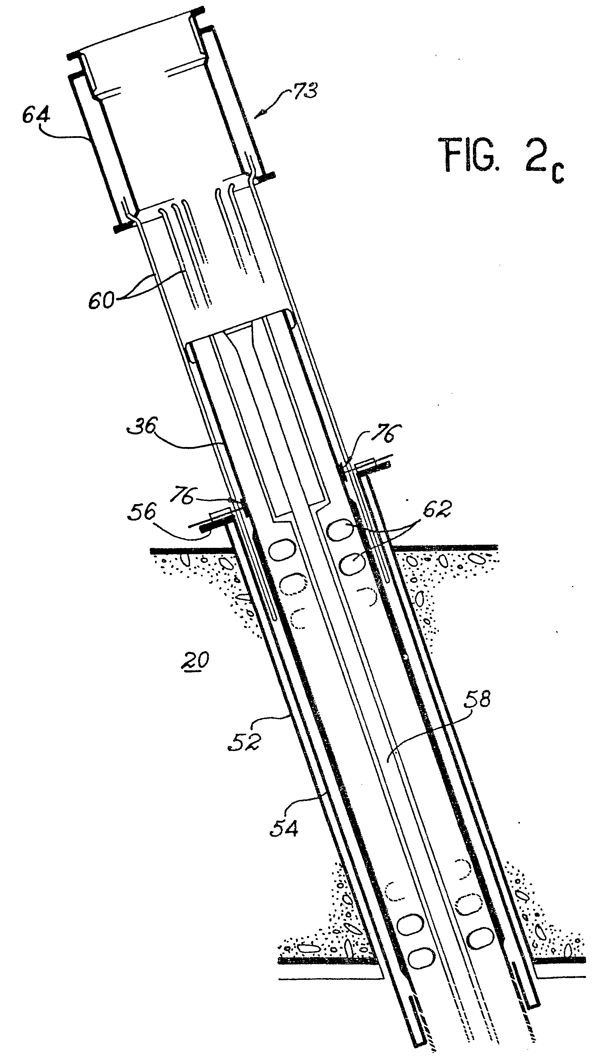

Chaque assemblage 30 est formé d'un boîtier extérieur contenant un faisceau d'aiguilles gainées contenant le combustible nucléaire, et il est disposé verticalement dans le coeur 14. Le grappin 28 permet d'extraire chaque assemblage du coeur du réacteur et de le transférer dans un pot de manutention 34 disposé à la périphérie du coeur, tout en le maintenant dans le sodium liquide 16 contenu dans la cuve. Le pot de manutention 34 est susceptible de se déplacer sur une rampe de guidage inclinée 36 plongeant à l'intérieur de la cuve 12 et traversant la dalle de fermeture 20 par un ensemble de traversée 38 dont différentes variantes seront décrites plus en détail par la suite en se référant aux figures 2 à 6. Le pot 34, réalisé par exemple conformément aux dispositions décrites et revendiquées dans le brevet français FR-A-2 379 139 déposé le 26 janvier 1977 au nom du Commissariat à l'Energie Atomique pour »pot de manutention d'un assemblage combustible«, est amené dans l'axe de la rampe 36 grâce à un système à étrier 40.

L'assemblage irradié 30 placé dans le pot 34 est déplacé le long de la rampe inclinée 36 au travers de l'ensemble de traversée 38 pour être amené hors de la cuve 12 et à l'intérieur d'une hotte pivotante 42, par exemple au moyen d'un treuil (non représenté). La hotte pivotante 42 est réalisée par exemple conformément aux dispositions décrites et revendiquées dans le brevet français FR-A-2 188 251 déposé le 8 juin 1972 au nom du commissariat à l'Energie Atomique pour »hotte de transfert«. De préférence, la hotte pivotante 42 est équipée d'un circuit de ventilation permettant d'évacuer la puissance résiduelle de l'assemblage irradié lorsque celuici se trouve à l'intérieur de la hotte.

La hotte pivotante 42 est conçue pour imprimer au pot de manutention contenant l'assemblage combustible une rotation de 180° permettant de l'amener en vis-à-vis d'une seconde rampe inclinée 44. La rampe 44 traverse, par intermédiaire d'un ensemble de traversée 46 qui peut être identique à l'ensemble de traversée 38, une dalle 48 obturant un réceptacle de stockage 50 contigu à la cuve 12 du réacteur, de telle sorte que la dalle 48 est disposée dans le prolongement de la dalle 20. Le réceptacle de stockage 50 est rempli de métal liquide, et il contient un barillet tournant (non représenté) destiné à recevoir l'assemblage irradié 30 après que celui-ci ait été extrait du pot de manutention 34 au moyen d'un organe de manutention équipé d'un grappin (non représenté) du même type que l'organe 26 et que le grappin 28.

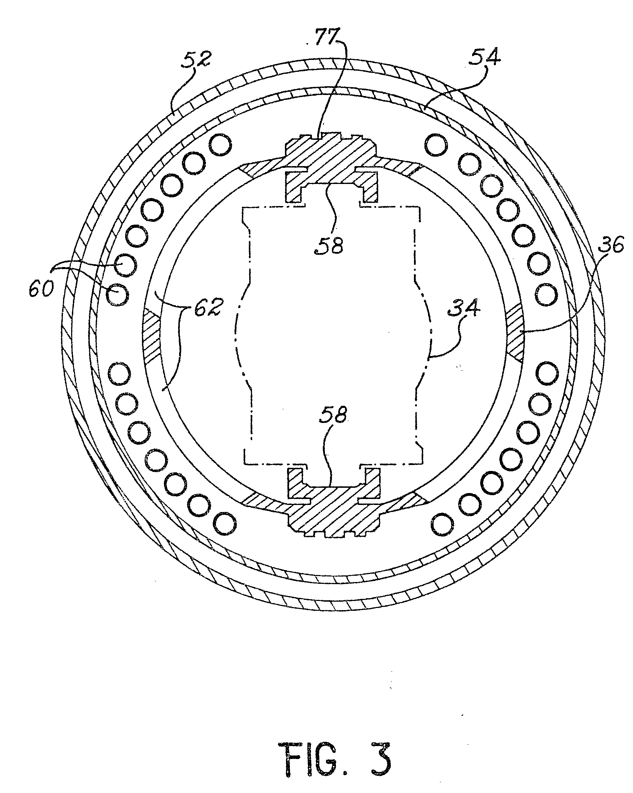

On décrira maintenent en se référant aux figures 2a et 3, une première variante de réalisation de l'ensemble de traversée de dalle 38, étant entendu que l'ensemble de traversée de dalle 46 est identique à l'ensemble 38 et ne sera pas décrit séparément.

Comme l'illustre en particulier la figure 2a, l'ensemble de traversée 38 de la dalle de confinement 20 de la cuve du réacteur comprend une virole de traversée 52 solidaire de la dalle 20 et dans laquelle est disposée une fourrure thermique 54 portée par la virole 52 et espacée de celle-ci de façon à définir un espace annulaire communiquant avec la cuve du réacteur. La virole 52 et la fourrure 54 forment au-dessus de la dalle 20 une bride 55 sur laquelle est prévue une surface d'appui 56.

La virole 52 et la fourrure 54 définissent dans la dalle 20 un passage que traverse librement la rampe de guidage 36, celle-ci étant pourvue dans un plan normal au plan de coupe de la figure 2a de deux rails de guidage 58 sur lesquels viennent rouler des galets (non représentés) qui peuvent être montés soit sur un chariot portant le pot de manutention 34, soit directement sur ce dernier.

Conformément à la présente invention, et selon une première variante de réalisation, représentée sur les figures 2a et 3, un faisceau de caloducs 60 est disposé dans l'espace annulaire défini entre la fourrure 54 et la rampe 36 parallèlement à l'axe de celle-ci et sur toute la longueur de la virole 52. Plus précisément, et comme l'illustre en particulier la figure 3, les caloducs 60 sont disposés en quatre groupes regulièrement répartis autour de la rampe 36 en regard de lumières 62 ménagées dans cette dernière, afin de permettre à la majeure partie de la chaleur dissipée par un assemblage irradié bloqué accidentellement dans la virole 52 de parvenir jusqu'aux caloducs 60. A titre d'illustration, on notera par exemple qu'on peut disposer ainsi entre la rampe 36 et la fourrure 54 soit trente six caloducs dont le diamètre extérieur est d'environ 33,4 mm, soit vingt huit caloducs dont le diamètre extérieur est d'environ 48,3 mm (variante représentée sur la figure 3).

Comme l'illustre la figure 2a, les caloducs 60 se prolongent vers le haut au-delà de la virole 52 à l'intérieur d'une calandre annulaire 64 dans laquelle circule un fluide de refroidissement tel que de l'air entre un orifice d'entrée inférieur 66 et un orifice de sortie supérieur 68. La calandre annulaire 64 permet ainsi d'évacuer le flux de chaleur acheminé au-dessus de la dalle 20 par les caloducs 60. Afin d'améliorer les échanges de chaleur entre les caloducs 60 et le fluide de refroidissement circulant dans la calandre 64, la partie de chacun de caloducs disposée à l'intérieur de la calandre comporte des ailletes radiales de refroidissement 70. En outre, la circulation du fluide de refroidissement entre l'orifice d'entrée 66 et l'orifice de sortie 68 est améliorée par la présence d'une chicane hélicoïdale 72 à l'intérieur de la calandre 64. La circulation du fluide de refroidissement à l'intérieur de la calandre 64 entre l'orifice d'entrée 66 et l'orifice de sortie 68 peut provenir soit d'un circuit sous pression branché en parallèle sur le circuit de ventilation de la hotte pivotante 42, soit de la convection naturelle, la calandre 64 étant alors branchée sur la dépression créée par une cheminée. Dans les deux cas, cette circulation peut être contrôlée en manoeuvrant deux vantelles (non représentées) situées respectivement au niveau des orifices d'entrée 66 et de sortie 68.

De façon connue, chacun des caloducs 60 est fermé et rempli d'un fluide caloporteur qui se trouve en phase liquide dans la partie basse des caloducs et en phase gazeuse dans la partie haute des caloducs, c'est-à-dire à l'intérieur de la calandre 64, de façon à définir respectivement une zone d'évaporation et une zone de condensation. Le fluide caloporteur est choisi en fonction des conditions de fonctionnement imposées aux caloducs, et notamment en fonction du domaine de température dans lequel il doit fonctionner, de sa tension de vapeur et du flux de chaleur à transférer. Tenant compte de ces différents éléments, le fluide caloporteur contenu dans les caloducs sera constitué de préférence par du mercure.

L'ensemble constitué par les caloducs 60 et par la calandre annulaire 64 et son système de refroidissement constituent un dispositif d'évacuation 73 de la chaleur résiduelle dissipée par un assemblage combustible irradié disposé dans un pot de manutention bloqué accidentellement dans la virole 52.

Comme l'illustre en particulier la figure 2a, la calandre annulaire 64 repose sur la surface d'appui 56 définie sur la virole 52 et sur le fourreau 54, et les caloducs 60 sont positionnés radialement entre la rampe 36 et la fourrure 54 par des chicanes 75 solidaires des caloducs et régulièrement réparties sur toute la longueur de la virole 52. Ces chicanes maintiennent l'espacement entre les caloducs tout en permettant à chaque groupe de caloducs de se dilater indépendamment de la rampe. Au moins l'une des chicanes 75, disposée dans la partie inférieure de la virole 52, assure un supportage glissant du faisceau de caloducs 60, par l'intermédiaire de deux glissières 77 (figure 3). Cette disposition permet au faisceau de se dilater transversalement et de suivre les variations du diamètre de la rampe 36, quelle que soit son inclinaison. Par ailleurs, en régime nominal, c'est-à-dire lors du fonctionnement normal du réacteur, les chicanes 75 limitent les mouvements de convection de l'argon 18 contenu dans la cuve 12. Il en résulte une diminution du transfert de chaleur à travers l'ensemble virole 52-fourrure 54. Enfin, cette structure autorise les démontages du dispositif d'évacuation de chaleur 73 et de la rampe de guidage 36 indépendamment l'un de l'autre comme on le verra par la suite.

Le centrage de la partie supérieure de la rampe 36 par rapport à la calandre 64 est assuré par des patins de glissement 74 associés à l'extrémité supérieure de la rampe et coopérant avec des surfaces appropriées formées à l'intérieur de la calandre. Enfin, la fourrure 54 se termine dans sa partie basse par une chicane 78 enveloppant l'extrémité inférieure des caloducs 60.

Lorsqu'un pot de manutention 34 contenant un assemblage irradié qui vient d'être extrait du coeur du réacteur se trouve bloqué accidentellement à l'intérieur de l'ensemble de traversée 38 ou de l'ensemble de traversée 46, la chaleur dissipée par le combustible nucléaire traverse le pot de manutention et parvient jusqu'aux caloducs 60 en passant par les lumières 62 ménagées dans la rampe 36. L'échauffement de fluide caloporteur tel que du mercure contenu dans les caloducs, qui se trouve à l'état liquide au niveau de la traversée de la dalle 20, conduit à une évaporation de ce liquide qui se trouve ainsi transformé en gaz dans la partie supérieure de chacun des caloducs disposée à l'intérieur de la calandre 64. Le fluide caloporteur vaporisé contenu dans les caloducs 60 à l'intérieur de la calandre annulaire 64 est alors refroidi par le fluide de refroidissement circulant entre l'orifice d'entrée 66 et l'orifice de sortie 68 de la calandre; cette action de refroidissement du fluide circulant dans la calandre 64 est accélérée par les ailettes radiales 70 et par la chicane hélicoïdale 72. Il en résulte une condensation du fluide caloporteur à l'intérieur de la calandre 64. Un équilibre s'établit ainsi entre la phase liquide et la phase vapeur du fluide caloporteur contenu dans les caloducs, de telle sorte que la chaleur dissipée par l'assemblage combustible contenu dans un pot de manutention qui serait bloqué accidentellement dans la traversée de la dalle se trouve régulièrement transférée au-dessus de la dalle par les caloducs, puis évacuée par le fluide de refroidissement circulant dans la calandre 64. La température régnant dans la virole 52 se trouve ainsi stabilisée à un niveau convenable.

Bien que les conditions de fonctionnement des caloducs en régime normal soient très peu érosives, il est nécessaire d'assurer l'inspection et la maintenance des différentes parties de l'ensemble de traversée selon l'invention. Ainsi, comme l'illustrent respectivement les figures 2b et 2c, la rampe de guidage 36 et le dispositif d'évacuation de chaleur 73 sont démontables indépendamment l'un de l'autre dans cette première variante de réalisation de l'invention.

Les opérations de démontage de la rampe 36 ou du dispositif 73 doivent être précédées d'un démontage partiel de la hotte pivotante 42 et de la mise en place d'une hotte de déchargement sur la surface d'appui 56 formée sur la bride 55. Comme l'illustre la figure 2b, la rampe de guidage 36 peut alors être démontée indépendamment du dispositif d'évacuation de la chaleur. De même, et comme l'illustre la figure 2c, le dispositif d'évacuation de la chaleur 73 que constituent les caloducs 60 et la calandre annulaire 64 peut également être démonté, la rampe 36 restant en place et étant maintenue suivant trois génératrices par trois organes rétractables, tels que 76, par exemple à vis.

On remarquera que l'ensemble de traversée qui vient d'être décrit permet de ne modifier ni la géométrie, ni la technologie des rampes de guidage existantes tout en disposant la source froide que constitue la calandre 64 parcourue par un fluide de refroidissement à proximité immédiate de la traversée de la dalle 20, c'est-à-dire du pot de manutention lorsque celui-ci se trouve bloqué dans cette traversée. En outre, le dispositif de refroidissement peut être retiré indépendamment sans avoir à intervenir sur la rampe.

En régime nominal, c'est-à-dire au cours du fonctionnement normal du réacteur et lorsque la circulation d'air à l'intérieur de la calandre est totalement arrêtée, les caloducs 60, soumis à un flux radial de chaleur allant de l'intérieur de la traversée vers l'extérieur, assurent une homogénésation de la température le long de cette traversée et permettent ainsi une limitation de la température de la virole 52. Cette caractéristique permet d'envisager, dans une variante non représentée, la suppression de la fourrure thermique 54, les caloducs 60 étant alors disposés directement entre la virole 52 et la rampe 36.

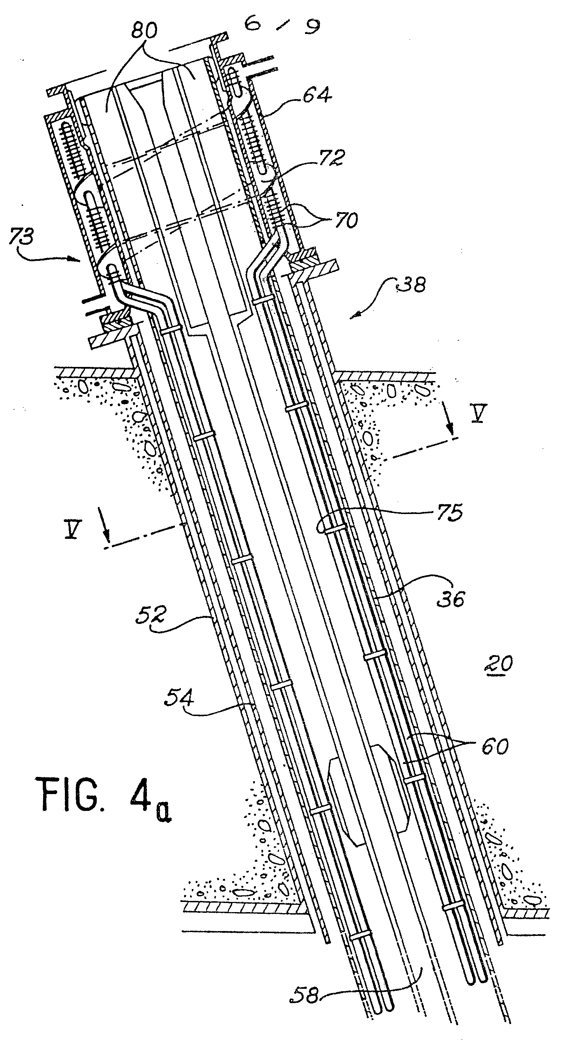

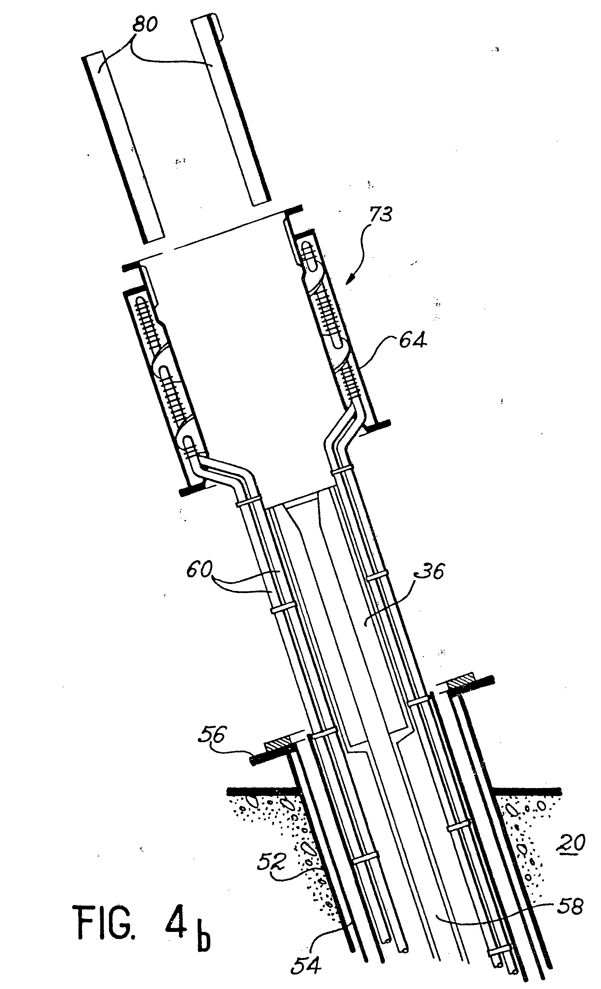

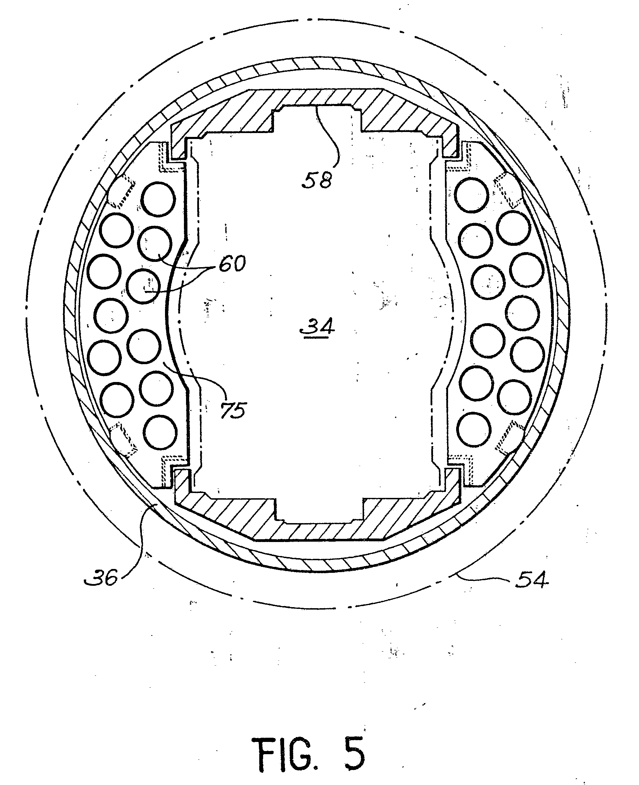

On a représenté sur les figures 4a et 5 une variante de réalisation de l'ensemble de traversée représenté sur les figures 2a et 3, dans laquelle au lieu d'être disposés dans l'espace annulaire défini entre la rampe 36 et la virole 52, les caloducs 60 sont disposés à l'intérieur de la rampe de guidage 36 et de part et d'autre du pot de manutention 34. Cette solution est thermiquement plus efficace que la précédente, puisque les caloducs sont disposés à proximité immédiate du pot de manutention, et elle permet de supprimer les lumières dans la rampe de guidage, ce qui autorise une réduction de l'épaisseur de la paroi de celle-ci et conduit à une certaine diminution de l'encombrement radial de l'ensemble au niveau de la traversée de la dalle 20. Grâce à cette disposition et à titre d'exemple illustratif, on remarquera qu'il est possible de disposer à l'intérieur de la rampe 36 soit deux groupes de onze caloducs dont le diamètre extérieur est d'environ 48,4 mm (variante représentée sur la figure 5), soit deux groupes de vingt caloducs dont le diamètre extérieur est d'environ 33,4 mm.

La variante de réalisation représentée sur les figures 4a et 5 présente cependant l'inconvénient que, la calandre annulaire 64 restant inchangée par rapport à la variante représentée sur la figure 2a, les caloducs 60 doivent traverser la rampe 36 au voisinage de l'extrémité supérieure de la virole 52. Il en résulte que pour effectuer le démontage du dispositif d'évacuation de chaleur 73 et de la rampe de guidage 36, il est nécessaire de prévoir dans la partie supérieure de cette dernière au moins un élément démontable disposé dans le prolongement de chacun des deux groupes de caloducs 60.

Dans un premier mode de réalisation, représenté sur la figure 4b, de la variante selon la figure 4a, la partie supérieure de la rampe 36 comprend deux secteurs cylindriques démontables 80 disposés chacun dans le prolongement de l'un des groupes de caloducs 60 et dont le démontage autorise d'abord le démontage du dispositif d'évacuation de chaleur 73 comprenant les caloducs 60 et la calandre annulaire 64 et ensuite le démontage de la rampe 36.

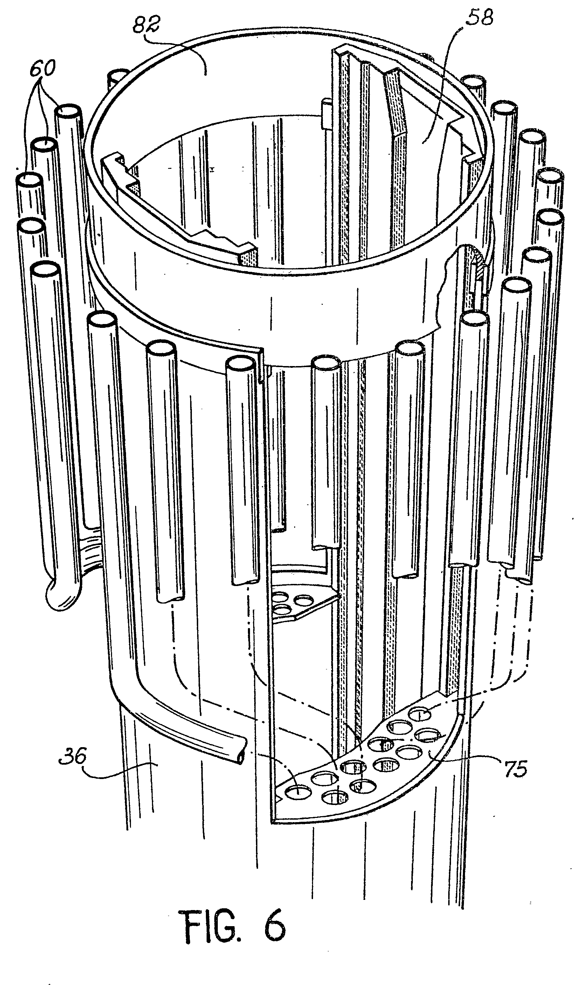

Dans un second mode de réalisation de l'invention représenté sur la figure 6, les deux panneaux démontables 80 sont remplacés par une couronne démontable 82 rapportée à l'extrémité de la rampe 36. Cette solution permet d'assurer une meilleure rigidité transversale de l'extrémité supérieure de la rampe de guidage.

Dans ces deux modes de réalisation, comme l'illustre la figure 4b, le démontage de la rampe 36 ne peut être effectué qu'après enlèvement du dispositif d'évacuation de chaleur 73, cet enlèvement étant lui-même conditionné par le démontage des panneaux 80 (premier mode selon la figure 4b) ou de la couronne 82 (second mode selon la figure 6).

Le fonctionnement des ensembles des traversée représentés sur les figures 4a et 5 sur la figure 6 est identique au fonctionnement de l'ensemble de traversée représenté sur les figures 2a et 3, de telle sorte qu'il ne sera pas décrit à nouveau.

Bien entendu, l'invention n'est pas limitée aux modes de réalisation qui viennent d'être décrits à titre d'exemple, mais en couvre toutes les variantes. Ainsi, on comprendra qu'un tel ensemble peut être utilisé à chaque fois qu'un pot de manutention contenant un assemblage irradié doit traverser une dalle de confinement quel que soit le chemin suivi par ce pot de manutention et même si ce chemin est sensiblement différent de celui représenté à titre d'exemple sur la figure 1. De même, il importe peu que le pot de manutention contenant les assemblages irradiés soit guidé directement à l'intérieur de la rampe traversant la dalle ou qu'il soit placé à l'intérieur d'un chariot assurant le déplacement le long de la rampe.

## Revendications

1. Ensemble de traversée de dalle de confinement pour transfert de combustible nucléaire irradié, comprenant une virole de traversée (52) solidaire de la dalle (20) et une rampe de guidage (36) traversant la virole et dans laquelle se déplace un pot de manutention (34) portant le combustible, ledit ensemble (38) étant caractérisé en ce qu'il comprend de plus un dispositif (73) d'évacuation de la chaleur résiduelle dissipée par le combustible, ce dispositif comportant un faisceau de calodics (60) disposés parallèlement à la rampe sur une longueur au moins égale à celle de la virole, et des moyens (64) pour évacuer le flux de chaleur acheminé au-dessus de la dalle par les caloducs.

2. Ensemble de traversée de dalle selon la revendication 1, caractérisé en ce que les moyens pour évacuer le flux de chaleur acheminé au-dessus de la dalle par les caloducs comprennent une calandre annulaire (64) dans laquelle circule un fluide de refroidissement, et en ce que le faisceau de caloducs (60) se prolonge à l'intérieur de ladite calandre.

3. Ensemble de traversée de dalle selon la revendication 2, caractérisé en ce que la partie de chacun des caloducs (60) disposée à l'intérieur de ladite calandre (64) comporte des ailettes de refroidissement (70).

4. Ensemble de traversée de dalle selon l'une quelconque des revendications 2 ou 3, caractérisé en ce qu'une chicane hélicoïdale (72) est disposée dans la calandre entre un orifice d'entrée (66) et un orifice de sortie (68) du fluide de refroidissement.

5. Ensemble de traversée de dalle selon l'une quelconque des revendications 1 à 4, caractérisé en ce que les caloducs (60) sont disposés dans l'espace annulaire défini entre la virole (52) et la rampe (36).

6. Ensemble de traversée de dalle selon la revendication 5, caractérisé en ce que les caloducs (60) sont répartis autour de la rampe (36) en regard de lumières (62) ménagées dans celle-ci.

7. Ensemble de traversée de dalle selon l'une quelconque des revendications 5 ou 6, caractérisé en ce que le dispositif (73) d'évacuation de la chaleur résiduelle dissipée par le combustible et la rampe de guidage (36) sont démontables indépendamment l'un de l'autre.

8. Ensemble de traversée de dalle selon l'une quelconque des revendications 1 à 4, caractérisé en ce que les caloducs (60) sont disposés à l'intérieur de la rampe de guidage (36), de part et d'autre du pot de manutention (34).

9. Ensemble de traversée de dalle selon la revendication 8, prise en combinaison avec l'une quelconque des revendications 2 à 4, caractérisé en ce que la partie de la rampe de guidage (36) disposée à l'intérieur de ladite calandre (64) est munie d'au moins un élément amovible (80), le dispositif (73) d'évacuation de la chaleur résiduelle dissipée par le combustible étant démontable après dépose dudit élément, et la rampe de guidage (36) étant démontable après dépose de ce dispositif.

10. Ensemble de traversée de dalle selon l'une quelconque des revendications précédentes, caractérisé en ce que des moyens (75) sont prévus pour assurer le positionnement radial des caloducs (60) par rapport à la rampe (36) tout en permettant leur déplacement relatif selon une direction parallèle à l'axe de la rampe.

11. Ensemble de traversée de dalle selon l'une quelconque des revendications précédentes, caractérisé en ce que le fluide caloporteur contenu dans les caloducs (60) est du mercure.

## Patentansprüche

1. Durchführungsanordnung einer Abschlußplatte für den Transfer bestrahlten nuklearen Brennstoffs, mit einem mit der Platte (20) einstückigen Durchführungsmantel (52) und einer Führungsrampe (36), die den Mantel durchsetzt, und in der ein den Brennstoff aufnehmender Beförderungstopf (34) bewegbar ist, dadurch gekennzeichnet, daß die Anordnung (38) darüber hinaus eine Wärmeabführvorrichtung (73) für die von dem Brennstoff abgestrahlte Restwärme enthält, daß die Vorrichtung ein Bündel von Wärmekanälen (40), die parallel an der Rampe über eine wenigstens der Länge des Mantels entsprechende Länge angeordnet sind, und Mittel (64) aufweist, um den von den Wärmekanälen nach oberhalb der Platte geleiteten Wärmefluß abzuführen.

2. Platten-Durchführungsanordnung nach Anspruch 1, dadurch gekennzeichnet, daß die Mittel zum Abführen des von den Wärmekanälen nach oberhalb der Platte geleiteten Wärmeflusses einen ringförmigen Kühlraum (64) aufweisen, in dem ein Kühlfluid zirkuliert, und daß das Bündel der Wärmekanäle (60) sich in das Innere des Kühlraums hinein erstreckt.

3. Platten-Durchführungsanordnung nach An-spruch 2, dadurch gekennzeichnet, daß der im Inneren des Kühlraums (64) gelegenen Teil jedes Wärmekanals (60) Kühlrippen (70) trägt.

4. Platten-Durchführungsanordnung nach Anspruch 2 oder 3, dadurch gekennzeichnet, daß innerhalb des Kühlraums zwischen einer Einlaßöffnung (66) und einer Auslaßöffnung (68) des Kühlfluids eine schraubenförmige Ablenkplatte (72) angeordnet ist.

5. Platten-Durchführungsanordnung nach einem der Ansprüche 1 bis 4, dadurch gekennzeichnet, daß die Wärmekanäle (60) in dem zwischen dem Mantel (52) und der Rampe (36) gebildeten Ringraum angeordnet sind.

6. Platten-Durchführungsanordnung nach Anspruch 5, dadurch gekennzeichnet, daß die Wärmekanäle (60) um die Rampe (36) herum verteilt sind, wobei sie in der Rampe ausgebildeten Löchern (62) gegenüber liegen.

7. Platten-Durchführungsanordnung nach Anspruch 5 oder 6, dadurch gekennzeichnet, daß die Wärmeabführvorrichtung (73) für die von dem Brennstoff abgestrahlte Restwärme und die Führungsrampe (36) unabhängig voneinander demontierbar sind.

8. Platten-Durchführungsanordnung nach einem der Ansprüche 1 bis 4, dadurch gekennzeichnet, daß die Wärmekanäle (60) im Inneren der Führungsrampe (36) beiderseits des Befestigungstopfs (34) angeordnet sind.

9. Platten-Durchführungsanordnung nach Anspruch 8 in Kombination mit einem der Ansprüche 2—4, dadurch gekennzeichnet, daß der im Inneren des Kühlraums (64) gelegene Teil der Führungsrampe (36) mit wenigstens einem lösbaren Element (80) ausgestattet ist, daß die Wärmeabführvorrichtung (73) für die von dem Brennstoff abgestrahlte Restwärme nach dem Abnehmen dieses Elements demontierbar ist, und daß die Führungsrampe (36) nach der Abnahme dieser Vorrichtung demontierbar ist.

10. Platten-Durchführungsanordnung nach einem der vorhergehenden Ansprüche, dadurch gekennzeichnet, daß Mittel (75) vorgesehen sind, um die radiale Lage der Wärmekanäle (60) in bezug auf die Rampe (36) sicherzustellen, während ihre Bewegung in einer zur Rampenachse parallelen Richtung möglich ist.

11. Platten-Durchführungsanordnung nach einem der vorhergehenden Ansprüche, dadurch gekennzeichnet, daß das in den Wärmekanälen (60) enthaltene Kühlfluid Quecksilber ist.

## Claims

1. Cover plate-traversing assembly for transferring irradiated nuclear fuel comprising a sleeve (52) passing through and fastened to the cover plate (20) and a guide ramp (36) extending through the sleeve, and within which a holding vessel (34) carrying the fuel is displaceable, said assembly (38) being characeried in that it comprises at least one apparatur (73) for removing residual heat emitted by the fuel, said unit comprising a bundle of heat pipes (60) disposed parallel to the ramp over a length at least equal to that of the sleeve, and means (64) for removing the heat flux carried above the cover plate by the heat pipes.

2. Cover plate-traversing assembly according to Claim 1 characterized in that the means for removing the heat flux carried above the cover plate by the heat pipes comprise an annular jacket (64) in which circulates a cooling fluid, and in that the bundle of heat pipes (60) extends into the interior of said jacket.

3. Cover plate-traversing assembly according to Claim 2 characterized in that the part of each heat pipe (60) located within the jacket (64) comprises cooling vanes (70).

4. Cover plate-traversing assembly according to either Claim 2 or 3 characterized in that a helicoidal baffle (72) is located within the jacket between an inlet (66) and an outlet (68) for cooling fluid.

5. Cover plate-traversing assembly according to any one of Claims 1 to 4 characterized in that the heat pipes (60) are located within the annular space defined between the sleeve (52) and the ramp (36).

6. Cover plate-traversing assembly according to Claim 5 characterized in that the heat pipes (60) are distributed around the ramp (36) facing windows (62) formed in the latter.

7. Cover plate-traversing assembly according to Claim 5 or 6 characterized in that the apparatus (73) for removing residual heat emitted by the fuel, and the guide ramp (36), are dismountable independently of one another.

8. Cover plate-traversing assembly according to any one of Claims 1 to 4 characterized in that the heat pipes (60) are located within the guide ramp (36) on both sides of the holding vessel (34).

9. Cover plate-traversing assembly according to Claim 8 taken in combination with any one of Claims 2 to 4 characterized in that the part of the guide ramp (36) located within the said jacket (64) comprises at least one detachable unit (80), the apparatus (73) for removing residual heat emitted by the fuel being dismountable after removal of said unit, and the guide ramp (36) being dismountable after removal of said apparatus.

10. Cover plate-traversing assembly according to any one of the preceding Claims characterized in that means (75) are provided to ensure location of the heat pipes (60) radially with respect to the ramp (36) and permitting their relative displacement in a direction parallel to the axis of the ramp.

11. Cover plate-traversing assembly according to any one of the preceding Claims characterized in that the heat transfer fluid contained in the heat pipes is mercury.

FIG. 1

FIG. 2ₐ

**0 024 990**

11

FIG. 2b

FIG. 2c

FIG. 3

80    6 ⁄ 9

64

72

70

73

38

V

V

75

36

20

52

54

60

FIG. 4a

58

FIG. 4 b

FIG. 5

FIG. 6